# EUROPÄISCHE PATENTSCHRIFT

(11) **EP 1 126 000 B1**
(45) Veröffentlichungstag und Bekanntmachung des Hinweises auf die Patenterteilung: **16.02.2005**
(21) Anmeldenummer: 01100289.6
(22) Anmeldetag: 04.01.2001
(51) Int. Cl.: C09J 7/02, C09J 131/04

(54) **Selbstklebende Schutzfolie insbesondere für lackierte Fahrzeuge oder Fahrzeugteile**
Self-adhesive protective foil, espescially for painted motor vehicles or car parts
Film auto-adhésif, notamment pour des voitures peintes ou des éléments de carrosserie peints

(30) Priorität: 16.02.2000 DE 10007060
(43) Veröffentlichungstag der Anmeldung: 22.08.2001
(73) Patentinhaber: tesa AG, 20253 Hamburg (DE)
(72) Erfinder: Böhm, Nicolai, Dr., 20257 Hamburg (DE); Klemp, Jobst Waldemar, 22869 Schenefeld (DE); Schütz, Ingolf, 20535 Hamburg (DE)

(56) Entgegenhaltungen:
- EP-A- 0 761 315
- EP-A- 0 826 754
- EP-A- 0 905 209

## Beschreibung

Die Erfindung betrifft eine Schutzfolie, die aufgrund ihrer großen Witterungsbeständigkeit und Haftungssicherheit besonders für den temporären Schutz von frischen Automobillacken gegen Verschmutzungen und Beschädigungen, aber auch für andere empfindliche Oberflächen wie Metalle, Kunststoffe und Glasflächen, geeignet ist.

Die Konservierung und der Schutz von Kraftfahrzeugen während des Transports vom Hersteller zum Händler wird schon seit geraumer Zeit praktiziert.
Die herkömmliche Methode der Konservierung von Automobilen ist das Auftragen von Paraffinwachsen in der Stärke von 5 bis 20 µm. Es hat sich aber gezeigt, daß insbesondere bei waagerecht liegenden Flächen der Fahrzeuge, wie Motorhaube, Dach und Kofferraumdeckel, eine derart dünne und zumeist ungleichmäßige Schicht gegen äußere Einflüsse, wie beispielsweise die ätzende Wirkung von Vogelkot, nicht genügend Schutz bietet.
Ein erheblicher Nachteil der Paraffinwachsversiegelung ist die notwendige Entkonservierung mittels Dampfstrahl, Tensiden oder Lösungsmitteln. Die umweltgerechte Rückgewinnung und Entsorgung der Rückstände verursachen einen großen apparativen Aufwand sowie sehr hohe Kosten.

Eine aktuelle Entwicklung auf dem Gebiet des Automobil-Transportschutzes ist der Einsatz von Hauben, die das gesamte Fahrzeug bedecken und durch Wärmeeinwirkung paßgenau aufgeschrumpft werden. Solche Haubenlösungen sind sehr kostspielig und erfordern großen Aufwand beim Anlegen der Haube, dem Aufschrumpfen und vor allem beim Einsteigen in den maskierten Wagen. Dafür sind eigens Reißverschlußöffnungen vorgesehen, die zeitraubend geöffnet und wieder verschlossen werden müssen. Die Sicht beim Rangieren ist stark beeinträchtigt und es kommt durch eingeschlossenen Schmutz und durch unvermeidbares Scheuern auf dem Lack stellenweise zu Mattierungen. Diese Lösung kann sich nicht durchsetzen.

Es werden stattdessen verstärkt temporär aufgebrachte selbstklebende Oberflächenschutzfolien angewendet. Diese sind speziell für den mechanischen und chemischen Schutz von frischen Kraftfahrzeuglacken vorgesehen und haben eine gegenüber den Wachsen deutlich verbesserte Schutzwirkung und gegenüber den Hauben den Vorteil, kostengünstiger und deutlich schneller applizierbar zu sein.

Eine wesentliche Anforderung an eine Oberflächenschutzfolie ist ihre Witterungsbeständigkeit über einen Zeitraum von mehr als einem halben Jahr. So muß eine solche Folie auch nach einem halben Jahr intensiver Sonnenlichtexposition in einem Stück abziehbar sein und darf keine Klebmasserückstände auf dem Lack hinterlassen. Sie muß zudem eine ausreichende Anfangsklebrigkeit haben, um sich in schwierigen Verklebungsgeometrien nicht vorzeitig selbsttätig abzulösen, darf gleichzeitig aber auch keine zu große Endklebkraft auf Lack aufweisen, damit die Folie ohne großen Kraftaufwand oder gar Reißen entfembar ist.

Gemäß dem Stand der Technik werden daher als Folienmaterialien in der Regel Polyolefine oder Mischungen aus solchen, die üblicherweise mit Lichtschutzmitteln und Titandioxid abgemischt sind, verwendet.

Als Selbstklebemassen finden vielfältige Systeme Verwendung, die aber ausnahmslos mit Schwächen behaftet sind.

Selbstklebemassen auf Naturkautschukbasis haben eine relativ gute Anfangshaftung und lassen sich rückstandsfrei wieder abziehen. Diese Massen sind allerdings selbst bei kurzzeitiger Einwirkung von UV-Strahlung nicht alterungsstabil. Dies führt zu starken schmierigen oder lackartig verhärteten Rückständen auf dem Lack nach praxisrelevanten Witterungsbeanspruchungen über einen Zeitraum von einigen Monaten.

In US 5,612,136 ist eine Schutzfolie mit einer Selbstklebemasse auf Acrylatbasis erwähnt. Polyacrylatmassen sind zwar sehr UV-stabil. Unterwirft man aber unvernetzte Polyacrylatmassen einer Wechselklimalagerung, so zeigen sie nur teilweise eine gute Verträglichkeit mit Lackoberflächen. Verträglichkeit bedeutet, daß die Lackoberfläche nach Entfernen des Klebebandes keinerlei Deformationen aufweist. Zudem zeigen diese ein unerwünscht starkes Aufziehverhalten. Werden diese Massen chemisch oder durch Strahlen stark vernetzt, lassen sie sich zwar leichter abziehen, verursachen aber auf der anderen Seite verstärkt deutlich sichtbare, bleibende Deformationen der Lackoberfläche.

Selbstklebemassen auf Polyisobutylenbasis (Polyisobutylenhomopolymer oder Butylkautschuk) zeigen nach einer Wechselklimalagerung auf in der Automobilindustrie gebräuchlichen Lacken eine geringe Haftfestigkeit. Sie ist bei ruckartiger Beanspruchung, wie sie bei Flattern im Fahrtwind auftritt, so gering, daß die in der Praxis geforderte Verklebungsfestigkeit nicht immer ausreichend gegeben ist. Insbesondere bei Feuchteeinfluß ist die Haftfestigkeit häufig derart reduziert, daß sich die Folie während des Transports von den geschützten Fahrzeugen ablöst, so daß zum einen keine Schutzwirkung mehr besteht und zum anderen ein Sicherheitsrisiko vorliegt, wenn sie nachfolgenden Fahrzeugen auf die Windschutzscheibe weht.
Diese Kleber sind darüber hinaus wenig kohäsiv und zeigen daher Masserückstände beim Abziehen der Folie, insbesondere im Kantenbereich nach UV-Alterung. Darüber hinaus weist diese Selbstklebemasse keine Verträglichkeit mit den im Automobilbau üblichen Dichtungsprofilen beziehungsweise den darin enthaltenen Weichmachern auf: beim Abziehen der Schutzfolie von Fensterprofilen verbleiben auf dem Gummi Rückstände des Klebers. Derartige Klebeartikel sind in EP 0 519 278, JP 95-325285 und US 5,601,917 beschrieben.

Wesentlich UV-stabiler als Polyisobutylene sind Kleber aus hydrierten Styrol-Dien-Blockcopolymeren, deren Anwendung im JP 827 444 beschrieben ist. Ein wesentlicher Nachteil solcher Blockcopolymere ist deren thermisch reversible Vernetzung über die Styroldomänen. Zieht man eine daraus hergestellte Klebefolie im Sommer von einem in der Sonne erwärmten Fahrzeug ab, bleibt der Kleber zum großen Teil auf dem Lack haften, weil die Kohäsion der Klebemassen geringer als die Haftung auf dem Lack ist. Eine Erwärmung führt stets zum Schrumpf der Schutzfolie, der in der Wärme weiche Kleber schmiert daher an den sich zurückziehenden Kanten der Klebefolie auf das Blech ab.

Die in der DE 195 32 220 A1 dargelegte Klebefolie mit Ethylenvinylacetat-Kleber (EVAc) ist den oben beschriebenen Systemen in der Haftung deutlich überlegen. Eine Beeinflussung der zu schützenden Lacke tritt mit Ausnahme von Einkomponenten-PU-Systemen nicht auf. Diese Klebefolie weist aber beim Abziehen nach Gebrauch eine deutlich zu hohe Verklebungsfestigkeit auf, wodurch die Klebefolie häufig nicht ohne Abrisse abgezogen werden kann. Diese Erhöhung der Verklebungsfestigkeit bei Lagerung des Klebeverbundes, vom Fachmann "Aufziehen" genannt, ist durch Wechselwirkungen des Klebers, insbesondere polare Kräfte, mit dem Lack bedingt. Auf der anderen Seite ergeben polare Comonomere wie Acrylat oder Vinylacetat die gewünschte hohe Anfangshaftung.

Die WO 96/37568 A1 beschreibt die Verwendung von Polyhexen beziehungsweise Polyocten für einen unpolaren Haftkleber. Die in den Beispielen beschriebenen Polymere weisen wegen der geringen Kohäsion zwar ein geringes Aufziehen auf, bedingt durch das niedrige Molekulargewicht derartiger handelsüblicher Polymere führen diese Polymere aber ebenfalls zu Rückständen, die man durch Zugabe anderer Polymere, dort "cold flow restricting agent" genannt, zu vermeiden versucht. Für die Praxis sind die genannten Kleber trotzdem noch zu wenig kohäsiv, was nach Bewitterung zu Rückständen führt, insbesondere wenn das Klebeband durch Wärmeeinwirkung schrumpft. Ein ähnliches Phänomen zeigen Ethylenpropylendienmischepolymerisate (EPDM), wie sie in DE 197 42 805 genannt werden. Diese zeigen zusätzlich eine sehr begrenzte Anfangshaftung.

Aufgabe der Erfindung ist es, eine selbstklebende Schutzfolie insbesondere für frische Automobillacke, zur Verfügung zu stellen, die die geschilderten Nachteile des Standes der Technik nicht oder nicht in dem Maße zeigt. Insbesondere soll die selbstklebende Schutzfolie neben einer ausgeprägten Initialklebkraft über eine ausgewogene (nicht zu starke) Endklebkraft, Rückstandsfreiheit beim Entfemen sowie Lackverträglichkeit verfügen.

Gelöst wird diese Aufgabe durch eine selbstklebende Schutzfolie, wie sie im Hauptanspruch niedergelegt ist. Gegenstand der Unteransprüche sind dabei vorteilhafte Weiterbildungen der selbstklebende Schutzfolie, besondere Anwendungsmöglichkeiten sowie ein besonders vorteilhaftes Verfahren zur Herstellung der Oberflächenschutzfolie.

Demgemäß betrifft die Erfindung eine selbstklebende Schutzfolie insbesondere für lackierte Fahrzeuge oder Fahrzeugteile mit einer ein- oder mehrlagigen Trägerschicht und einer Kleberschicht aus einer Mischung von Synthesekautschuken, wobei
a) die Kleberschicht aus einer polaren Komponente A und einer unpolaren Komponente B besteht,
b) wobei die polare Komponente A zu einem Gewichtsanteil von 50 bis 99 % vorliegt und aus einem oder einer Mischung von Copolymeren aus Ethylen und Vinylacetat besteht, dessen Vinylacetatgehalt zwischen 40 Gew.-% und 80 Gew.-% beträgt, und
c) die unpolare Komponente B zu einem Gewichtsanteil von 1 bis 50 % vorliegt und aus einem oder einer Mischung von schwachkristallinen oder amorphen in der Hauptkette gesättigten Homo- oder Copolymeren aus α-Olefinen mit 2 bis 12 Kohlenstoffatomen besteht.

In der selbstklebenden Schutzfolie insbesondere für lackierte Fahrzeuge oder Fahrzeugteile mit einer ein- oder mehrlagigen Trägerschicht und einer Kleberschicht kann die unpolare Komponente B zu einem Gewichtsanteil von 1 bis 50 % vorliegen und aus Copolymeren aus α-Olefinen 2 bis 12 Kohlenstoffatomen und nichtkonjugierten Dienen bestehen.

Als Trägerschicht des Klebers dient eine thermoplastische Polyolefinfolie, welche in einer weiteren vorteilhaften Ausführungsform unverstreckt ist. Weiter vorzugsweise enthält diese mindestens ein Polyolefin aus der Gruppe der Polyethylene (zum Beispiel HDPE, LDPE, MDPE, LLDPE, VLLDPE, Copolymere des Ethylens mit polaren Comonomeren) und/oder der Gruppe der Polypropylene (zum Beispiel Polypropylen-Homopolymere, Polypropylen-Random-Copolymere oder Polypropylen-Block-Copolymere).

Bevorzugt werden Mischungen verschiedener geeigneter Polyolefine verwendet, um die mechanischen und thermischen Eigenschaften sowie Glanz, Extrusionsverhalten, Verankerung des Klebers, usw. optimal einstellen zu können.

Für die Trägerfolien ist eine Dicke von 20 bis 80 µm bevorzugt. Die Weichheit der Trägerfolie spielt bei der Verformbarkeit während der Applikation der Schutzfolie eine Rolle, die Kraft bei 10 % Dehnung sollte 25 N/15 mm, vorzugsweise 16 N/15 mm, sowohl in Längs- als auch in Querrichtung nicht überschreiten (Zugversuch nach DIN EN ISO 527-7-5). Daher sollen die Trägerfolien unverstreckt sein. Durch Recken steigt die Kraft bei 10 % Dehnung so stark an, daß die Anschmiegsamkeit nicht mehr gegeben ist.

Um der Trägerfolie die geforderte Witterungsstabilität zu geben, ist der Zusatz von Lichtschutzmitteln notwendig. Ihre Funktion besteht vorrangig in der Vermeidung der Versprödung der Trägerfolie. Derartige Lichtschutzmittel sind bei Gaechter und Müller, Taschenbuch der Kunststoff-Additive, München 1979, bei Kirk-Othmer (3.) 23, 615 - 627, bei Encycl. Polym. Sci. Technol. 14, 125 - 148 und bei Ullmann (4.) 8, 21; 15, 529, 676 beschrieben. Insbesondere HALS-Lichtschutzmittel wie zum Beispiel Dimethylsuccinat-Polymer mit 4-Hydroxy-2,2,6,6-tetramethyl-1-piperidinethanol (CAS-Nr. 65447-77-0), Bis(2,2,6,6-tetramethyl-4-piperidinyl)sebacat (CAS-Nr. 52829-07-9) oder Poly[[6-[(1,1,3,3-tetramethyl butyl) amino]-1,3,5-triazine-2,4-diyl][[(2,2,6,6-tetramethyl-4-piperidyl) imino] hexamethylene [(2,2,6,6-tetramethyl-4-piperidyl) imino]] (CAS-Nr. 70624-18-9) sind für die erfindungsgemäße Schutzfolie geeignet.
Die Menge des Lichtschutzmittels sollte mindestens 0,15 Gew.-%, vorzugsweise mindestens 0,30 Gew.-% bezogen auf die Trägerfolie betragen.

Eine Verwendung von Antioxidantien für die Folie (zum Beispiel Irganox 1010 oder Tris-Nonylphenyl-phosphit) ist vorteilhaft, aber nicht zwingend notwendig. Weitere geeignete UV-Absorber, Lichtschutz- und Alterungsschutzmittel sind in der EP 0 763 584 A1 aufgeführt.
Als Antioxidantien können demnach N,N-di-2-naphthyl-p-phenylenediamin, 2,5-di-(tamyl)hydroquinon, Trimethyldihydroquinolin Polymer and 6-ethoxy-2,2,4-trimethyl-1,2-dihydroquinolin, 2,6-di-t-butyl-p-cresol, 2,2'-methylene-bis(4-methyl-6-t-butylphenol), 4,4'butylidene-bis(3-methyl-6-t-butylphenol), 4,4'-thio-bis(3-methyl-6-t-butylphenol), stearylbeta -(3,5-di-t-butyl-4-hydroxyphenyl)propionat, tetrakis[methylene-3-(3',5'-di-t-butyl-4'hydroxyphenyl)propionate]methan, 1,3,5-trimethyl-2,4,6-tris(3,5-di-t-butyl-4-hydroxybenzyl)benzen und 1,1,3-tris(2-methyl-4-hydroxy-5-t-butylphenol)butan, Dilauryl thiodipropionat, Distearyl thiodipropionat, Lauryl stearyl thiodipropionat and Dimyristyl thiodipropionat, Triisodecyl phosphit, Diphenyl isodecyl phosphit, Triphenyl phosphit und Trinonyl phosphit sowie N-salicyloyl-N'-aldehydehydrazin, N-salicyloyl-N'-acetylhydrazin, N,N'-diphenyloxamid und N,N'-di-(2-hydroxyphenyl)oxamid Verwendung finden.

Eine zusätzliche Verbesserung der Lichtstabilität der Trägerfolie ist auch durch Zusatz von Titandioxid möglich. Vorteilhaft bzgl. der mechanischen Eigenschaften und der Homogenität des Weißgrades sind 5 bis 15 Gew.-% Titandioxidzusatz.
Vorzugsweise liegt die UV-Durchlässigkeit der Schutzfolie im Bereich von 290 bis 360 nm durch das Zusammenwirken von Lichtschutzmitteln und Pigmenten unter 1 %, vorzugsweise unter 0,1 %.

Für die polare Komponente der Klebmasse eignen sich Ethylenvinylacetat-Typen (EVAc), deren VAc-Anteil zwischen 40 und 80 Gew.-% liegt, vorzugsweise zwischen 50 und 70 Gew.-%. Es können auch unterschiedliche EVAc-Typen gemischt werden. Für die unpolare Komponente eignen sich Poly-α-olefine wie Polyisobutylen (PIB), Poly-1-buten (PB), Ethylenpropylencopolymere (EPM), Ethylenpropylendienterpolymere (EPDM), wobei das Dien nichtkonjuguiert ist, Poly-1-hexen, Poly-1-octen und andere schwachkristalline oder amorphe Copolymere von Ethylen und α-Olefinen mit 4-12 Kohlenstoffatomen. Auch die unpolaren Polymere können zur Erzielung optimaler Eigenschaften gemischt werden.

Die so hergestellten Schutzfolien weisen auf der einen Seite eine gute Haftfestigkeit auf verschiedenen in der Automobilindustrie gebräuchlichen Lacken, auch unter Feuchteoder Feuchtklimaeinfluß, auf, so daß sich die Schutzfolie auch unter Windeinwirkung oder unter Spannung durch Verklebung auf gewölbten Flächen nicht vom Fahrzeug ablöst. Darüber hinaus zeigt die Selbstklebemasse eine hinreichende Verklebungsfestigkeit innerhalb der ersten Minuten nach Applikation, so daß die Schutzfolie bereits nach einer halben Stunde zum Beispiel einer starken Fahrtwindbelastung (bis zu 160 km/h) ausgesetzt werden kann. Im Gegensatz zu reinen EVAc-Klebmassen läßt sich die Folie hingegen ohne übermäßigen Kraftaufwand ohne Reißen vom Lack abziehen. Weiterhin weist die erfindungsgemäße Schutzfolie auch ohne Auftragen einer Releaseschicht trotz stark haftenden Klebers eine für den Anwender hinreichend geringe Abrollkraft auf.

Die Klebkraft der erfindungsgemäßen Schutzfolie auf 2 K-PU-Lacken liegt in der Regel frisch über 0,4 und nach Wechselklimalagerung unter 2,8 N/cm (analog Methode AFERA 4001). Auch die Bestrahlung der Schutzfolie mit UV-Licht gemäß DIN 53387 1-A-X über 1000 Stunden, führt zu keinen Mängeln in den Eigenschaften der Schutzfolie: es treten keine Versprödung der Folie und keine Masserückstände beim Abziehen auf.

Schließlich läßt sich die erfindungsgemäße selbstklebende Schutzfolie besonders vorteilhaft durch Coextrusion herstellen.

Die erfindungsgemäße Schutzfolie ist somit besonders zum Montage- oder Transportschutz des frischen Abschlußlacks von Automobilen oder als Verarbeitungs- und Transportschutz von frisch lackierten Oberflächen geeignet, wie überhaupt zum Schutz von empfindlichen Lack-, Metall-, Kunststoff- oder Glasoberflächen. Die Verklebung der Schutzfolie kann dabei ohne das Auftreten jedweder Nachteile bereits eine halbe Stunde nach Ofendurchgang der lackierten Oberflächen erfolgen, obwohl zu diesem Zeitpunkt der Lack noch nicht vollständig ausgehärtet ist.
Weiterhin zeichnet sich die erfindungsgemäße Schutzfolie dadurch aus, daß sie bei Automobilen in großer Breite über Motorhaube, Dach und Kofferraum applizierbar ist und sich aufgrund ihrer Verformbarkeit planen und sogar leicht gewölbten geformten Flächen sehr gut anpaßt. Damit ist der Schutz der am stärksten durch Verschmutzung gefährdeten horizontalen Flächen möglich. Aber auch schmale Bereiche wie zum Beispiel der Türvorsprung unter den Fenstem, der Einstiegsbereich oder Stoßfänger können leicht abgedeckt werden. Der Schutz der vertikalen Flächen am Fahrzeug bietet sich besonders während der Montage derselben an.
Die Schutzfolie ist beständig gegen Sonnenlicht, Feuchtigkeit, Hitze und Kälte, wobei die Witterungsstabilität von wenigstens einem halben Jahr gegeben ist. Insbesondere der Zusatz von Pigmenten wie Titandioxid sowie von Lichtschutzstabilisatoren führt zu einer Verbesserung der UV-Beständigkeit der Schutzfolie. Auch höchste Sonneneinstrahlungsquoten, wie sie beispielsweise in Florida auftreten, führen nicht zu einem Versagen oder Ablösen der Schutzfolie. Die extrem geringe UV-Durchlässigkeit der Schutzfolie vermeidet die Zersetzung des Klebers durch Sonneneinwirkung.

Darüber hinaus gewährleistet die Festigkeit der Schutzfolie im Vergleich zur Konservierung mit Wachs einen einwandfreien Schutz gegen Verschmutzungen wie Vogelkot und Beschädigungen des gesamten Fahrzeugs durch leichte mechanische Einwirkungen. Die stoffliche oder energetische Verwertung der Schutzfolie ist möglich, insbesondere weil selbige halogenfrei ist.

Im folgenden soll die Erfindung anhand von Beispielen erläutert werden, ohne diese damit allerdings einschränken zu wollen.

### Beispiele

Alle Beispielfolien wurden durch Dreischichtflachfoliencoextrusion hergestellt. Zwei der drei Schichten dienten als Träger- respektive Haftvermittlerschicht und wurden in ihrer Zusammensetzung nicht variiert. Sie setzten sich wie folgt zusammen:
Trägerschicht (Dicke 50 µm):
   - 60 Teile Polypropylen-Blockcopolymer Daplen FFC 2012 (PCD)
   - 25 Teile Polypropylenhomopolymer Daplen KFC 201 (PCD)
   - 6,3 Teile LDPE Lupolen 1840 H (Elenac)
   - 8,4 Teile Titandioxid
   - 0,3 Teile UV-Lichtschutzmittel Tinuvin 770 (Ciba-Geigy)
Haftvermittlerschicht (Dicke 10 µm):
   - 50 Teile Polypropylen-Blockcopolymer Daplen FFC 2012 (PCD)
   - 50 Teile EVAc-Copolymer Escorene Ultra UL 00728 (Exxon)

Ausnahmen bildeten die Beispiele 12 und 13, die eine identische Träger- und Haftvermittlerschicht auf Basis der Trägeschichtzusammensetzung hatten, da die EVA/PP-Mischung als Haftvermittler für die coextrudierten Klebmassen ungeeignet war.

Die einzelnen Beispiele unterschieden sich ansonsten jeweils durch die coextrudierten Haftklebemassen gemäß Tabelle 1. Die fett markierten Beispiele 10 bis 13 sind Vergleichsbeispiele. Die Schichtdicke des Haftkleberauftrages betrug jeweils 25 µm.

**Tabelle 1**

| Haftkleberzusammensetzungen der Beispiele | | | | | | | | | | | | | |
|---|---|---|---|---|---|---|---|---|---|---|---|---|---|
| | 1 | 2 | 3 | 4 | 5 | 6 | 7 | 8 | 9 | 10 | 11 | 12 | 13 |
| EVAc 45 ¹⁾ | 20 | 17,5 | 15 | 8,75 | 8,75 | 20 | | | | 25 | | | |
| EVAc 50 ²⁾ | | | | | | | 80 | 80 | 80 | | 100 | | |
| EVAc 70 ³⁾ | 60 | 52,5 | 45 | 6,25 | 6,25 | 60 | | | | 75 | | | |
| Buna EPG 2050 ⁴⁾ | 20 | 30 | 40 | | | | 20 | | | | | | |
| Buna EPG 3440 ⁵⁾ | | | | 25 | | | | 20 | | | | 100 | |
| Buna EPG 2470 ⁶⁾ | | | | | 25 | | | | | | | | |
| Vistanex MML 80 ⁷⁾ | | | | | | 20 | | | 20 | | | | 100 |

| | | | | | | | | | | | | | |
|---|---|---|---|---|---|---|---|---|---|---|---|---|---|
| ¹⁾ EVAc mit 45 Gew.-% VAc-Gehalt | | | | | | | | | | | | | |
| ²⁾ EVAc mit 50 Gew.-% VAc-Gehalt | | | | | | | | | | | | | |
| ³⁾ EVAc mit 70 Gew.-% VAc-Gehalt | | | | | | | | | | | | | |
| ⁴⁾ EPM amorph (Bayer) | | | | | | | | | | | | | |
| ⁵⁾ EPDM amorph (Bayer) | | | | | | | | | | | | | |
| ⁶⁾ EPDM teilkristallin (Bayer) | | | | | | | | | | | | | |
| ⁷⁾ PIB (Exxon) | | | | | | | | | | | | | |

Die solchermaßen hergestellten Muster wurden großflächig auf 1K-PU-lackierte (Duraclear II, BASF), gewölbte und mit Sicken versehene Motorhauben verklebt. Die Beurteilung der Muster erfolgte nach folgenden Kriterien:
1. Klebkraft auf Lack nach 30 min bei Raumtemperatur
2. Klebkraft auf Lack nach dreitägiger Lagerung bei 90 °C
3. Deformationen des Lackes nach dreitägiger Lagerung bei 90 °C
4. Anwendungstechnisches Gesamturteil

### Ermittlung der Beurteilungsktriterien

1. und 2.:
   Die Klebkräfte in Punkt 1 und 2 wurden bei einem Abzugswinkel von 180° und einer Abzugsgeschwindigkeit von 300 mm/min und einer Temperatur von 23 °C ± 1°C und einer relativen Luftfeuchte von 50 % ± 5% gemessen (nach Methode AFERA 4001).
3.: Die Lackdeformationen an Verklebungskanten, Falten und Blasen wurden visuell auf einer Skala von 1 = nicht erkennbar, 2 = sehr schwach ausgeprägt, 3 = schwach ausgeprägt, 4 = mittelmäßig ausgeprägt, 5 = stark ausgeprägt beurteilt.
4.: Das anwendungstechnische Gesamturteil spricht eine Empfehlung aus, ob eine Schutzfolie zum Langzeitschutz von frischem Lack geeignet ist.

In Tabelle 2 sind die Ergebnisse zusammengefaßt.

**Tabelle 2**

| Beurteilungsergebnisse der verschiedenen Muster nach anwendungstechnischen Kriterien | | | | | | |
|---|---|---|---|---|---|---|
| Beispiel | Klebkraft auf Lack (N/cm) | | Lackdeformationen | | | Gesamturteil |
| | nach 30 min RT | nach 3 d 90 °C | Kante | Falte | Blase | |
| 1 | 0,5 | 2,2 | 3 | 2 | 2 | i.O. |
| 2 | 0,4 | 2,0 | 3 | 2 | 2 | i.O. |
| 3 | 0,3 | 1,7 | 2 | 2 | 2 | i.O. |
| 4 | 0,4 | 2,2 | 3 | 2 | 2 | i.O. |
| 5 | 0,3 | 2,0 | 3 | 2 | 2 | i.O. |
| 6 | 0,5 | 2,4 | 3 | 2 | 2 | i.O. |
| 7 | 0,4 | 2,1 | 3 | 2 | 2 | i.O. |
| 8 | 0,4 | 2,1 | 3 | 2 | 2 | i.O. |
| 9 | 0,5 | 2,4 | 3 | 2 | 2 | i.O. |
| 10 | 0,4 | 3,2 | 4 | 3 | 4 | n.i.O. |
| 11 | 0,4 | 3,0 | 4 | 3 | 3 | n.i.O. |
| 12 | < 0,05 | Kohäsionsbruch | 2 ¹⁾ | 2 ¹⁾ | 3 ¹⁾ | n.i.O. |
| 13 | 0,05 | 2,4 | 2 | 2 | 2 | n.i.O. |

| | | | | | | |
|---|---|---|---|---|---|---|
| ¹⁾ nach Abwaschen der Klebmasse | | | | | | |
| Abk.: RT = Raumtemperatur, d = Tage, i.O. = in Ordnung, n.i.O. = nicht in Ordnung | | | | | | |

### Diskussion

Die Beispiele 1 bis 9 zeigten eine gute Sofortklebkraft, die ein selbsttätiges Ablösen bei Verklebungen unter Spannung und in den Sicken verhinderte. Das Demaskieren der in der Wärme bis zur Endklebkraft aufgezogenen Muster erforderte einen moderaten Kraftaufwand und war ohne Reißen der Folie möglich. Die an unvermeidbaren Folienkanten, Falten und Luftblasen entstandenen Lackdeformationen, waren auf einem annehmbaren Niveau. Insgesamt wurden alle Beispiele 1 bis 9 als anwendungsgerecht beurteilt.

Die Muster 10 und 11 hatten zwar ebenfalls eine gute Anfangsklebkraft, waren nach der Temperaturbehandlung aber nur mit Mühe zu entfernen, wobei die Folie teilweise riß. Die Lackdeformationen waren stärker ausgeprägt als bei den Beispielen 1 bis 9 und kaum noch akzeptabel. Insgesamt waren die Muster aus anwendungstechnischer Sicht nicht zu empfehlen.

Das Beispiel 12 haftete zwar auf dem Lackblech, wies aber praktisch keine meßbare Anfangsklebkraft auf. Nach dem Aufziehen in der Wärme spaltete die Masse wegen ungenügender Kohäsion, ließ also großflächig Masserückstände zurück. Nach dem Entfernen der Masserückstände mit Hexan zeigten sich Deformationen auf besserem Niveau als bei den Mustern 1 bis 11.

Das Muster 13 hatte eine ähnlich schwache Anfangshaftung wie Muster 12, zog ansonsten aber gut auf und ließ sich gut in einem Stück demaskieren. Die Lackdeformationen waren sehr gering. Die schwache Anfangshaftung führte aber zu dem abwertenden Gesamturteil.

## Patentansprüche

1. Selbstklebende Schutzfolie insbesondere für lackierte Fahrzeuge oder Fahrzeugteile mit einer ein- oder mehrlagigen Trägerschicht und einer Kleberschicht, **dadurch gekennzeichnet, daß**
die Kleberschicht aus einer polaren Komponente A und einer unpolaren Komponente B besteht,
wobei die polare Komponente A zu einem Gewichtsanteil von 50 bis 99 % vorliegt und aus einem oder einer Mischung von Copolymeren aus Ethylen und Vinylacetat besteht, dessen Vinylacetatgehalt zwischen 40 Gew.-% und 80 Gew.-% beträgt, und
die unpolare Komponente B zu einem Gewichtsanteil von 1 bis 50 % vorliegt und aus einem oder einer Mischung von schwachkristallinen oder amorphen in der Hauptkette gesättigten Homo- oder Copolymeren aus α-Olefinen mit 2 bis 12 Kohlenstoffatomen besteht.

2. Selbstklebende Schutzfolie insbesondere für lackierte Fahrzeuge oder Fahrzeugteile mit einer ein- oder mehrlagigen Trägerschicht und einer Kleberschicht, **dadurch gekennzeichnet, daß**
die Kleberschicht aus einer polaren Komponente A und einer unpolaren Komponente B besteht,
wobei die polare Komponente A zu einem Gewichtsanteil von 50 bis 99 % vorliegt und aus einem oder einer Mischung von Copolymeren aus Ethylen und Vinylacetat besteht, dessen Vinylacetatgehalt zwischen 40 Gew.-% und 80 Gew.-% beträgt, und
die unpolare Komponente B zu einem Gewichtsanteil von 1 bis 50 % vorliegt und aus Copolymeren aus α-Olefinen 2 bis 12 Kohlenstoffatomen und nichtkonjugierten Dienen besteht.

3. Selbstklebende Schutzfolie nach Anspruch 1 und 2, **dadurch gekennzeichnet, daß** der Vinylacetatanteil in der polaren Komponente A 50 bis 70 Gew.-% beträgt.

4. Selbstklebende Schutzfolie nach mindestens einem der vorhergehenden Ansprüche, **dadurch gekennzeichnet, daß** die Trägerschicht aus einer thermoplastischen Polyolefinfolie besteht, welche unverstreckt ist.

5. Selbstklebende Schutzfolie nach mindestens einem der vorhergehenden Ansprüche, **dadurch gekennzeichnet, daß** die Trägerschicht mindestens ein Polyolefin aus der Gruppe der Polyethylene und/oder der Gruppe der Polypropylene enthält.

6. Selbstklebende Schutzfolie nach mindestens einem der vorhergehenden Ansprüche, **dadurch gekennzeichnet, daß** die Trägerschicht mindestens ein Lichtschutzmittel in einer Menge von mindestens 0,15 Gew.-% enthält.

7. Selbstklebende Schutzfolie nach mindestens einem der vorhergehenden Ansprüche, **dadurch gekennzeichnet, daß** die UV-Durchlässigkeit der Schutzfolie im Wellenlängenbereich von 290 bis 360 nm unter 1 % liegt.

8. Selbstklebende Schutzfolie nach mindestens einem der vorhergehenden Ansprüche, **dadurch gekennzeichnet, daß** die Dicke der Trägerschicht zwischen 20 und 80 µm beträgt, gegebenenfalls einschließlich einer Haftvermittlerschicht, die zwischen der Trägerschicht und der Kleberschicht angeordnet ist.

9. Verwendung einer Schutzfolie nach zumindest einem der vorhergehenden Ansprüche auf frisch lackierten Oberflächen von Automobilen oder Automobilteilen als Montage- oder Transportschutz.

10. Verwendung einer Schutzfolie nach zumindest einem der vorhergehenden Ansprüche zum Schutz von empfindlichen Lack-, Metall-, Kunststoff- oder Glasoberflächen.

11. Verfahren zur Herstellung einer selbstklebenden Schutzfolie nach mindestens einem der vorhergehenden Ansprüche, **dadurch gekennzeichnet, daß** die selbstklebende Schutzfolie durch Coextrusion hergestellt wird.

## Claims

1. Self-adhesive protective film, especially for painted vehicles or vehicle parts, having a single-ply or multi-ply backing layer and an adhesive layer, **characterized in that** the adhesive layer comprises a polar component A and an apolar component B,
the weight fraction of the polar component A being from 50 to 99% and comprising one or a mixture of copolymers of ethylene and vinyl acetate whose vinyl acetate content is between 40 and 80% by weight, and
the weight fraction of the apolar component B being from 1 to 50% and comprising one or a mixture of slightly crystalline or amorphous homopolymers or copolymers of α-olefin of 2 to 12 carbon atoms, said polymers being saturated in the main chain.

2. Self-adhesive protective film, especially for painted vehicles or vehicle parts, having a single-ply or multi-ply backing layer and an adhesive layer, **characterized in that** the adhesive layer comprises a polar component A and an apolar component B,
the weight fraction of the polar component A being from 50 to 99% and comprising one or a mixture of copolymers of ethylene and vinyl acetate whose vinyl acetate content is between 40 and 80% by weight, and
the weight fraction of the apolar component B being from 1 to 50% and comprising copolymers of α-olefins of 2 to 12 carbon atoms and nonconjugated dienes.

3. Self-adhesive protective film according to Claim 1 or 2, **characterized in that** the vinyl acetate fraction in the polar component A is from 50 to 70% by weight.

4. Self-adhesive protective film according to at least one of the preceding claims, **characterized in that** the backing layer comprises a thermoplastic polyolefin film which is unoriented.

5. Self-adhesive protective film according to at least one of the preceding claims, **characterized in that** the backing layer comprises at least one polyolefin from the group of the polyethylenes and/or from the group of the polypropylenes.

6. Self-adhesive protective film according to at least one of the preceding claims, **characterized in that** the backing layer comprises at least one light stabilizer in an amount of at least 0.15% by weight.

7. Self-adhesive protective film according to at least one of the preceding claims, **characterized in that** the UV permeability of the protective film in the wavelength region from 290 to 360 nm is less than 1%.

8. Self-adhesive protective film according to at least one of the preceding claims, **characterized in that** the thickness of the backing layer is between 20 and 80 µm, possibly including an adhesion promoter layer which is disposed between the backing layer and the adhesive layer.

9. Use of a protective film according to at least one of the preceding claims as assembly or transit protection on freshly finished surfaces of motor cars or motor car parts.

10. Use of a protective film according to at least one of the preceding claims to protect sensitive paint, metal, plastic or glass surfaces.

11. Process for producing a self-adhesive protective film according to at least one of the preceding claims, **characterized in that** the self-adhesive protective film is produced by coextrusion.

## Revendications

1. Film protecteur autoadhésif, notamment pour véhicules ou pièces de véhicules peints, comportant une couche support en une ou plusieurs épaisseurs et une couche adhésive, **caractérisé en ce que**
la couche adhésive consiste en une composante polaire A et une composante non polaire B,
la composante polaire A étant présente dans une proportion de poids de 50 % à 99 % et consistant en un seul ou un mélange de copolymères d'éthylène et de vinylacétate contenant entre 40 % et 80 % en poids de vinylacétate et
la composante non polaire B étant présente dans une proportion de poids de 1 à 50 % et consistant en un mélange d'homo- ou copolymères faiblement cristallins ou amorphes saturés dans la chaîne principale de α-oléfines contenant 2 à 12 atomes de carbone.

2. Film protecteur autoadhésif notamment pour véhicules ou pièces de véhicules peints comportant une couche support en une ou plusieurs épaisseurs et une couche adhésive, **caractérisé en ce que**
la couche adhésive consiste en une composante polaire A et une composante non polaire B,
la composante polaire A étant présente dans une proportion de poids de 50 % à 99 % et consistant en un seul ou un mélange de copolymères d'éthylène et de vinylacétate contenant entre 40 % et 80 % en poids de vinylacétate et
la composante non polaire B étant présente dans une proportion de poids de 1 à 50 % et consistant en un mélange de copolymères de α-oléfines contenant 2 à 12 atomes de carbone et de diènes non conjugués.

3. Film protecteur autoadhésif selon les revendications 1 et 2, **caractérisé en ce que** la proportion de vinylacétate va jusqu'à 50 à 70 % en poids dans la composante polaire A.

4. Film protecteur autoadhésif selon au moins l'une quelconque des revendications précédentes, **caractérisé en ce que** la couche support consiste en un film thermoplastique de polyoléfine qui n'est pas étiré.

5. Film protecteur autoadhésif selon au moins l'une quelconque des revendications précédentes, **caractérisé en ce que** la couche support contient au moins une polyoléfine du groupe des polyéthylènes et/ou du groupe des polypropylènes.

6. Film protecteur autoadhésif selon au moins l'une quelconque des revendications précédentes, **caractérisé en ce que** la couche support contient au moins un inhibiteur de lumière dans une quantité d'au moins 0,15 % en poids.

7. Film protecteur autoadhésif selon au moins l'une quelconque des revendications précédentes, **caractérisé en ce que** la perméabilité aux UV du film protecteur se situe, dans la plage de longueur d'ondes allant de 290 à 360 nm, en dessous de 1 %.

8. Film protecteur autoadhésif selon au moins l'une quelconque des revendications précédentes, **caractérisé en ce que** l'épaisseur de la couche support va de 20 à 80 µm, le cas échéant y compris une couche promotrice d'adhérence qui est disposée entre la couche support et la couche adhésive.

9. Utilisation d'un film protecteur selon au moins l'une quelconque des revendications précédentes sur des surfaces d'automobiles ou de pièces d'automobiles fraîchement peintes en tant que protection pour le montage et le transport.

10. Utilisation d'un film protecteur selon au moins l'une quelconque des revendications précédentes pour la protection de surfaces sensibles peintes, en métal, matière plastique ou verre.

11. Procédé de fabrication d'un film autoadhésif selon au moins l'une quelconque des revendications précédentes, **caractérisé en ce que** le film protecteur autoadhésif est fabriqué par coextrusion.
